Europäisches Patentamt

European Patent Office

Office européen des brevets

(19)

(11) **EP 1 321 913 A2**

(12) **EUROPÄISCHE PATENTANMELDUNG**

(43) Veröffentlichungstag:
25.06.2003 Patentblatt 2003/26

(51) Int Cl.$^7$: **G08G 1/00**

(21) Anmeldenummer: 02027425.4

(22) Anmeldetag: 09.12.2002

(84) Benannte Vertragsstaaten:
**AT BE BG CH CY CZ DE DK EE ES FI FR GB GR
IE IT LI LU MC NL PT SE SI SK TR**
Benannte Erstreckungsstaaten:
**AL LT LV MK RO**

(30) Priorität: **21.12.2001 DE 10163505**

(71) Anmelder: **SIEMENS AKTIENGESELLSCHAFT
80333 München (DE)**

(72) Erfinder: **Sachse, Thomas, Dr.
83052 Bruckmühl (DE)**

(54) **Verfahren zur Untersuchung einer Messgrösse**

(57) Bei einem Verfahren zur Untersuchung einer Messgröße (q, v) ist es bekannt, zwischen einer Untersuchungszentrale (2) und mindestens einem an einer dezentralen Messstelle angeordneten, autarken Detektionssystem (1), Daten mittels elektromagnetischer Wellen (3) zu übertragen und in der Untersuchungszentrale (2) für verschiedene Typen von Untersuchungszeiträumen (A, B, C) typischerweise zu erwartende Messdaten als Referenzdaten (Ref$_t$A, Ref$_t$B, Ref$_t$C) bereitzustellen. Indem von der Untersuchungszentrale (2) an ein Detektionssystem (1) die Referenzdaten (Ref$_t$) für einen vorgesehenen Untersuchungszeitraum gesendet werden, vom Detektionssystem (1) Messdaten (Mess$_t$) erfasst werden, welche Messwerte der zu untersuchenden Messgröße (q, v) repräsentieren, im Detektionssystem (1) eine Abweichung der erfassten Messdaten (Mess$_t$) von den gesendeten Referenzdaten (Ref$_t$) ermittelt wird, bei Überschreitung eines vorgegebenen Grenzwertes ($\Delta_t$) der Abweichung, die bis dahin im Untersuchungszeitraum erfassten Messdaten (Mess$_t$) vom Detektionssystem (1) an die Untersuchungszentrale (2) gesendet und alternative Referenzdaten angefordert werden, dann in der Untersuchungszentrale (2) ermittelt wird, ob alternative Referenzdaten vorliegen, von welchen die gesendeten Messdaten (Mess$_t$) eine geringere Abweichung als von den eingangs gesendeten Referenzdaten (Ref$_t$) aufweisen, und gegebenenfalls solche alternativen Referenzdaten von der Untersuchungszentrale (2) an das Detektionssystem (1) gesendet werden, wird ein Verfahren der eingangs genannten Art bereitgestellt, welches eine hohe Aktualität der in der Untersuchungszentrale (2) vorliegenden Informationen bei gleichzeitig geringen Übertragungskosten ermöglicht.

FIG 2

**Beschreibung**

Die Erfindung bezieht sich auf ein Verfahren zur Untersuchung einer Messgröße gemäß dem Oberbegriff des Patentanspruches 1 sowie auf eine Vorrichtung zur Durchführung des Verfahrens.

Bei der Untersuchung von Messgrößen an dezentralen Messstellen kommt es vor, dass vor Ort aufgenommene Messdaten zur Auswertung an eine Zentrale nicht über Datenleitungen, sondern mittels elektromagnetischer Wellen, also per Funk oder sonstwie leitungslos, übertragen werden müssen. Wenn Messgrößen an wechselnden Messstellen oder nur temporär zu untersuchen sind, ist eine feste Installation eines Detektorsystems mit Anschluss an ein Energieversorgungs- und an ein Datenübertragungsnetz häufig nicht rentabel. Typische Beispiele hierfür sind die Felderhebung von verkehrstechnischen oder umwelttechnischen Messgrößen, aber auch bautechnische oder geologische Messgrößen wie der Grundwasserstand.

Eine vollständige Information des Verkehrsteilnehmers über die Verkehrssituation würde eine lückenlose Erfassung auf den einzelnen Strecken des Straßennetzes erfordern. Da bei einer vollständigen Detektion ein starkes Ungleichgewicht zwischen Kosten und Nutzen herrschen würde, werden Verkehrsmanagement-Zentralen aufgebaut, welche nur einen Teil der Messquerschnitte erfordern und über verkehrstechnische Verfahren fehlende Informationen ergänzen. Zur Datenversorgung von Zentralen werden daher an ausgewählten Messquerschnitten des Straßennetzes Detektoren installiert, welche die lokale Verkehrssituation an die Zentrale melden. Hierbei kommen vorzugsweise autarke Detektoren zum Einsatz. Da dynamische Vorgänge wie Stauungen die Wahl eines geeigneten Messquerschnittes erschweren, ist ein versetzbarer Detektor hier besser geeignet als eine fest installierte Induktionsschleife. Aufgrund des geringeren Energieverbrauches und geringerer Kosten durch Solarstrom, werden die Kosten für die Datenerfassung reduziert. Außerdem sind autarke Detektoren schneller aufbaubar, unabhängig vom Energieversorgungs- und Nachrichtenkabelnetz und haben eine größere Produktlebenszeit gegenüber einer Schleife.

Ein autarkes Detektionssystem ist beispielsweise aus "Siemens: Funktionsbeschreibung TEU, Dokument Version 0.1" bekannt. Es besteht aus einer Steuereinheit, einer Kommunikationseinheit, einer Stromversorgung und aus Detektoren. Die Detektoren erfassen die passierenden Fahrzeuge, wobei die auflaufenden Daten gespeichert und verarbeitet werden. Die aggregierten Verkehrsdaten werden wahlweise zyklisch oder nach einem einstellbaren Meldeverhalten über ein geeignetes Datenübertragungsmedium, z. B. das Kurzmitteilungsband eines Mobilfunknetzes (GSM-SMS), an die Zentrale übertragen. Um den Energieverbrauch der Einheit und die Anzahl der Kommunikationsvorgänge möglichst gering zu halten, meldet sich die straßenseitige Einheit bei der Zentrale nicht regelmäßig, sondern nur bei relevanten Änderungen des Verkehrsaufkommens. In diesem ereignisorientierten Betrieb werden im Gerät auf der Basis eines lokalen Fundamentaldiagramms der Messstelle einoder zweidimensionale, bereichsentsprechende Verkehrsqualitätsstufen von Geschwindigkeits-, Belegungs- oder Verkehrsstärke-Werten definiert. Das Gerät meldet sich jeweils beim Übergang von einem in einen anderen Bereich.

Die Erlangung der in den Fundamentaldiagrammen enthaltenen historischen Informationen über den Verkehrsablauf erfordert bei dem bekannten System einen hohen manuellen verkehrstechnischen Aufwand für jede Messstelle. Da das Detektionssystem zu Beginn parametriert werden muss, sind Messwerte zu sammeln, zu interpretieren und hieraus Parameter abzuleiten. Bei Änderungen in der Charakteristik der Messstelle, z. B. bei der Reduzierung von Fahrstreifen durch Baustellen, muss manuell eine neue Parametrierung erstellt und im Detektionssystem geladen werden.

Eine vorteilhafte Beschreibung der Verteilung des Verkehrs an einer Messstelle erfolgt nach "Lindenbach, Röhr: Entwicklung von Verfahren zur großräumigen Prognose der Verkehrsentwicklung und Folgerungen für den Datenaustausch von Verkehrsrechnerzentralen, Teil I: Prognoseverfahren, Universität Gesamthochschule Kassel, Fachgebiet Verkehrs- und Betriebstechnik, Forschungsauftrag des Bundesministers für Verkehr FE03.272R93" durch sogenannte Ganglinien für verkehrstechnische Messgrößen, wie Verkehrsstärke und Geschwindigkeit. Dabei sind die Ganglinien für die Messstellen durch die Verkehrscharakteristik der Strecke, wie überwiegender Berufsverkehr, Wirtschaftsverkehr mit hohem Lkw-Anteil oder überwiegender Fernverkehr, bestimmt. Die Typisierung der Ganglinien erfolgt getrennt für Jahres-, Wochen- und Tagesganglinien der wöchentlichen, täglichen und stündlichen Verkehrsstärkewerte. Die Ganglinien werden an den Messquerschnitten in fünf Tagesgruppen eingeteilt: Montage, Dienstage bis Donnerstage, Freitage, Samstage sowie Sonn- und Feiertage. Diese Einteilung berücksichtigt die Feststellung, dass die Verkehrsentwicklung über einen Tag einer bestimmten Tagesgruppe relativ konstant ist, während im Vergleich zwischen den einzelnen Tagen Unterschiede festzustellen sind. Unter Standard-Ganglinien versteht man dabei relative Ganglinien der Verkehrsstärken, die aus historischen Messwerten für typische Tagesgruppen und Verkehrsarten aufgestellt werden. Grundlage hierfür ist ein fester Untersuchungszeitraum, in dem die durchgefahrenen Fahrzeuge aufsummiert werden.

Der Erfindung liegt nun die Aufgabe zugrunde, ein Verfahren der eingangs genannten Art sowie eine Vorrichtung zur Durchführung des Verfahrens bereitzustellen, das eine hohe Aktualität der in der Untersuchungszentrale vorliegenden Informationen über die Messwerte bei geringen Kommunikationskosten für die Messwerte erfassenden, autarken Detektionssysteme gewährleistet.

Die Aufgabe wird erfindungsgemäß gelöst durch ein Verfahren der eingangs genannten Art mit den im kennzeichnenden Teil des Patentanspruches 1 angegebenen Merkmalen, sowie durch eine Vorrichtung zur Durchführung des Verfahrens gemäß Patentanspruch 12. Solange die erfassten Messdaten nur gering von den für den Untersuchungszeitraum zugrunde gelegten Referenzdaten abweichen, erfolgt keine Übertragung von Daten an die Untersuchungszentrale. Das heißt bei erwartetem Verhalten der Messgröße fallen keine Kosten für Energieversorgung und Datenübertragung an. Überschreitet dagegen die Abweichung der aufgenommenen Messdaten von den Referenzdaten einen vorgegebenen Grenzwert, wird dies an die Untersuchungszentrale gemeldet. In der Untersuchungszentrale wird angezeigt, dass die Messgröße stärker als typischerweise für einen derartigen Untersuchungszeitraum zu erwarten war von den Referenzdaten abweicht. Dadurch können von der Untersuchungszentrale aus geeignete Maßnahmen ergriffen werden. Einerseits könnte über Beeinflussungselemente derart auf die Messgröße eingewirkt werden, dass ihre Messwerte in den erwarteten Bereich zurückkehren. Andererseits können in der Untersuchungszentrale anhand der bis zur Überschreitung in diesem Untersuchungszeitraum erfassten und zurückgesendeten Messdaten alternative Referenzdaten ermittelt werden, die die bisherigen Messwerte besser beschreiben, zu welchen also die zurückgesendeten Messdaten eine geringere Abweichung aufweisen als zu den eingangs gesendeten Referenzdaten. Werden solche alternative Referenzdaten ermittelt, können diese der weiteren Untersuchung in dem laufenden Untersuchungszeitraum zugrunde gelegt werden, wobei erwartet werden kann, dass aufgrund der geringeren Abweichung die Häufigkeit der Datenübertragung und damit die Höhe der einhergehenden Kosten herabgesetzt wird. Damit liegt bei geringem Kostenaufwand eine hohe Aktualität der Information über das Verhalten der untersuchten Messgröße vor, weil die Messwerte entweder sich innerhalb vorgegebener Grenzen um die zugrunde gelegten Referenzdaten bewegen oder bei Überschreitung dieser Grenzen die entsprechenden Messdaten an die Untersuchungszentrale gesendet werden.

In einer vorteilhaften Ausgestaltung der Erfindung werden nach einer Untersuchung die im Untersuchungszeitraum erfassten Messdaten an die Untersuchungszentrale gesendet und die Referenzdaten für einen solchen Untersuchungszeitraum aktualisiert. Zum einen dient dieser Verfahrensschritt als Lernphase bei einer neu eingerichteten Messstelle, wodurch Referenzdaten automatisch aus den erfassten Messdaten generiert werden. Zum anderen werden die bereits bestehenden Referenzdaten durch aktuelle Messdaten ergänzt, wodurch die bereitgestellten Referenzdaten für einen Untersuchungszeitraum sowie deren als Vertrauensbereich zu interpretierende Abweichung verbessert werden.

In einer bevorzugten Ausführungsform der Erfindung werden als Referenzdaten bereits erfasste Messdaten einer anderen Messstelle mit vergleichbarem Verhalten der zu untersuchenden Messgröße zugrunde gelegt. Hierdurch kann die Lernphase eines erfindungsgemäßen Verfahrens verkürzt werden, falls Messdaten der zu untersuchenden Messgröße mit einem ähnlichen erwarteten Verhalten, beispielsweise von einer bereits existierenden Messstelle, zur Verfügung stehen. Diese Referenzdaten können dann im laufenden Verfahren an der neuen Messstelle um die aktuellen Messdaten korrigiert bzw. verbessert werden.

In einer vorteilhaften Ausführungsform der Erfindung werden die Referenzdaten und/oder die erfassten Messdaten vor Ermittlung der Abweichung geglättet. Dadurch wird eine Datenübertragung bei zufälligen Grenzwertüberschreitungen der Messwerte verhindert und auf diese Weise die Versorgungs- und Übertragungskosten gering gehalten.

Vorzugsweise wird der Grenzwert der Abweichung als prozentualer Anteil oder absoluter Betrag der jeweiligen Werte der Referenzdaten oder als statistische Standardabweichung über die in die Referenzdaten eingegangenen Messdaten vorgegeben. Zu jedem Messzeitpunkt kann die zulässige Abweichung individuell vorgegeben werden. Damit können dem erfindungsgemäßen Verfahren je nach charakteristischem Verhalten der untersuchten Messgröße geeignete Grenzwerte für die zulässige Abweichung zugrunde gelegt werden, über die die Häufigkeit der Datenübertragung zur Untersuchungszentrale gesteuert werden kann. In die Grenzwerte können beispielsweise die zu einem bestimmten Messzeitpunkt während eines Untersuchungszeitraums gemachten, vergangenen Messwerte, insbesondere deren Verteilung, eingehen.

In einer bevorzugten Ausgestaltung des erfindungsgemäßen Verfahrens wird eine auf den Grenzwert der Abweichung bezogene Übereinstimmung zwischen den Messdaten und den entsprechenden Referenzdaten gemäß der Formel

$$u_t = \begin{cases} \dfrac{\mathrm{Ref}_t + \Delta_t - \mathrm{Mess}_t}{\Delta_t} \cdot 100\% \;\; \text{für}\;\; \mathrm{Mess}_t > \mathrm{Ref}_t \\[2em] \dfrac{\mathrm{Mess}_t - (\mathrm{Ref}_t - \Delta_t)}{\Delta_t} \cdot 100\% \;\; \text{für}\;\; \mathrm{Mess}_t < \mathrm{Ref}_t \end{cases}$$

berechnet, in der

Ref$_t$     für Referenzdaten,
Mess$_t$    für Messdaten,
$\Delta_t$     für Grenzwerte der Abweichung zwischen Mess- und Referenzdaten und
u$_t$      für die Übereinstimmung von Mess- und Referenzdaten

jeweils zu einem Messzeitpunkt t steht, als Maß für die Anpassungsgüte das arithmetische Mittel der bis zu einem Messzeitpunkt berechneten Übereinstimmungen ermittelt und bei Überschreiten eines vorgebbaren Schwellenwertes der Anpassungsgüte die bis dahin erfassten Messdaten an die Untersuchungszentrale gesendet und alternative Referenzdaten angefordert. Auf diese Weise wird jedem Messergebnis ein Übereinstimmungswert zugeordnet, der bei Identität mit dem Referenzdatum 100% beträgt, der mit zunehmender Abweichung abfällt, bei Erreichen des Grenzwertes 0% beträgt und schließlich mit zunehmender Überschreitung des Grenzwertes wachsende negative Werte annimmt. Weisen die erfassten Messdaten beispielsweise über einen bestimmten Zeitabschnitt des Untersuchungszeitraums eine zulässige Abweichung auf, liegen aber häufig in der Nähe des Grenzwertes, hat dies eine geringe, aber positive, Anpassungsgüte zur Folge. Um ein derartiges Verhalten an die Untersuchungszentrale melden zu können, wird ein Schwellenwert vorgegeben, bei dessen Unterschreitung die erfassten Messdaten zurückgesendet werden. Gleichzeitig können alternative Referenzdaten angefordert werden, die das detektierte Verhalten der Messgröße besser beschreiben. Typischerweise wird durch diesen Verfahrensschritt ein konstanter Offset der Messdaten gemeldet.

In einer weiteren vorteilhaften Ausführungsform der Erfindung werden in der Untersuchungszentrale Referenzdaten für geänderte Rahmenbedingungen an der Messstelle bereitgestellt, die bei Vorliegen solcher Bedingungen von der Untersuchungszentrale an das betroffene Detektionssystem gesendet werden. Ist für einen beabsichtigten Untersuchungszeitraum beispielsweise bekannt, dass aufgrund von Umwelteinflüssen, baulichen Maßnahmen oder sonstigen veränderten Rahmenbedingungen mit anderen Messdaten zu rechnen ist, so können geeignete, auf diese Rahmenbedingungen abgestellte Referenzdaten bereitgestellt werden und von der Untersuchungszentrale dem betroffenen Detektionssystem vor Untersuchungsbeginn zugesendet werden. So kann für jeden Untersuchungszeitraum entsprechend möglicher Rahmenbedingungen ein Satz von Referenzdaten gepflegt werden, auf dem im Bedarfsfall zurückgegriffen werden kann.

In einer weiteren bevorzugten Ausgestaltung des erfindungsgemäßen Verfahrens wird in regelmäßigen Zeitabständen vom Detektionssystem ein Signal zur Bestätigung seiner Funktionsfähigkeit an die Untersuchungszentrale gesendet. Hierdurch wird vermieden, dass ein Ausbleiben einer Meldung aufgrund eines Ausfalls des Detektionssystems in der Untersuchungszentrale fälschlicherweise dahingehend interpretiert wird, dass die aktuell erfassten Messdaten gut mit den zugrunde liegenden Referenzdaten übereinstimmen.

Zu weiteren Vorteilen und zu einer bevorzugten Anwendung des erfindungsgemäßen Verfahrens zur Untersuchung einer verkehrstechnischen Messgröße wird auf den entsprechenden Unteranspruch sowie auf die Zeichnungen verwiesen, in deren

FIG 1    der Ablauf eines erfindungsgemäßen Verfahrens während einer Lernphase,

FIG 2    in einem erfindungsgemäßen Verfahren zugrunde gelegte, erfasste und ermittelte Daten während eines Untersuchungszeitraums und

FIG 3    der Ablauf eines erfindungsgemäßen Verfahrens, der während einer Expertenphase schematisch bzw. diagrammatisch dargestellt ist.

Das erfindungsgemäße Verfahren zur Untersuchung einer Messgröße, wie etwa der Verkehrsstärke q und der Geschwindigkeit v, macht sich die Tatsache zunutze, dass sich an ähnlichen Tagen immer wieder die gleichen Situationen an einer Messstelle einstellen werden. Dies drückt sich durch entsprechend ähnliche Ganglinien der erfassten Messgröße an unterschiedlichen Tagen dieses Tagestyps aus. Mittels entsprechender Verfahren zur Klassifizierung und Fortschreibung von Ganglinien, die beispielsweise der eingangs erwähnten Druckschrift von Lindenbach und Röhr zu entnehmen sind, können für unterschiedliche Klassen gleicher Merkmale, z. B. Tagestypen wie Werktage oder Sonntage, typische Standard-Ganglinien automatisch ermittelt werden. Die Ganglinie eines speziellen Tages sollte dann nur um einen geringen Betrag von der Standard-Ganglinie für diesen Tagestyp abweichen. Da beim Aufbau einer neuen Messstelle im Allgemeinen keine Standard-Ganglinien als Referenzdaten vorliegen, müssen diese in einem ersten Schritt - einer so genannten Lernphase - ermittelt werden, bevor das Verfahren optimal arbeiten kann. Dies kann automatisch erfolgen. Falls zu Beginn eine geringere Genauigkeit akzeptiert wird, kann die Lernphase durch die Vorversorgung mit geeigneten Ganglinien von anderen Messstellen ähnlicher Charakteristik abgekürzt werden.

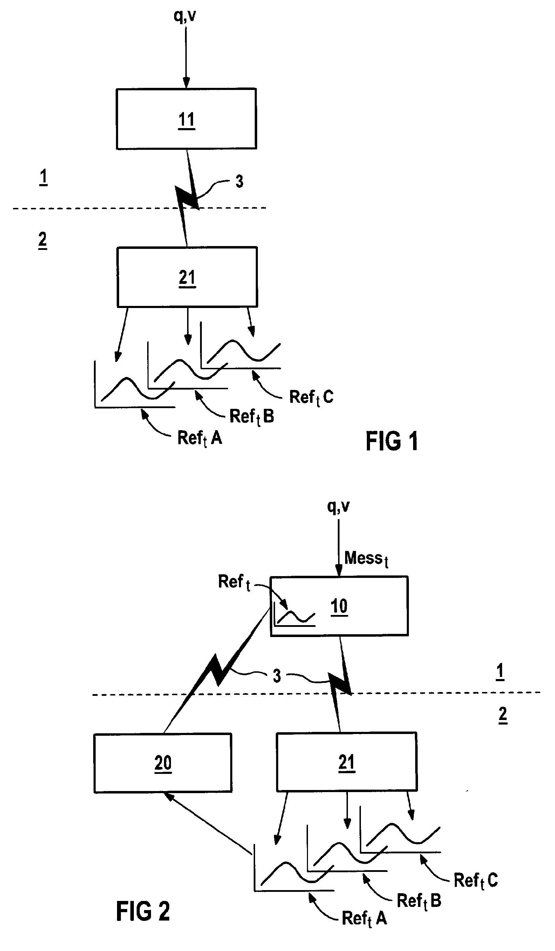

Gemäß FIG 1 werden in der Lernphase die Messwerte der zu untersuchenden Messgröße q, v auf der oberhalb der gestrichelten Linie dargestellten Ebene des Detektionssystems 1 erfasst und an die unterhalb der gestrichelten Linie dargestellten Ebene der als Verkehrsmanagement-Zentrale ausgebildeten Untersuchungszentrale 2 mittels elektromagnetischer Wellen 3 übertragen. Möglich sind hier Mikrowellen, Infrarotstrahlung oder auch andere geeignete Frequenzbereiche für derartige Datenübertragungen. In einem Entscheidungsverfahren 11 wird entschieden, wann eine Übertragung erfolgen soll. Dies ist beispielsweise möglich auf der Basis von konstanten Zeitintervallen oder aber auch unter Verwendung des Ganglinienoder Bereichsverfahrens. In der Lernphase können häufigere Übertragungen erforderlich sein. Entscheidend ist dabei nicht wann und wie oft übertragen wird, sondern dass vollständige Ganglinien eines Tagestyps vorliegen. Am Ende eines Tages werden die aufgenommenen Ganglinien in einem Klassifizierungsverfahren 21 in der Verkehrsmanagement-Zentrale 2 klassifiziert. Hierbei muss entschieden werden, welchem Typ die Ganglinie des vergangenen Tages zuzuordnen ist. Bei diesem Vergleich ist neben dem Tagestyp vor allem die Form der Ganglinie entscheidend. Ein konstanter Offset bewirkt nur eine Verschiebung der Ganglinie und kann leicht über Faktoren eingerechnet werden. Klassische Typen von Ganglinien können für die Tagestypen A, B, C, die beispielsweise Montag, Dienstag bis Donnerstag, Freitag, Samstag, Sonn- und Feiertag sein können, angegeben werden. Diese können evtl. auch in Urlaubszeit und Reisezeit sowie in spezielle Situationen, wie Veranstaltungen, unterschieden werden. Wenn bekannt ist, welcher Ganglinientyp maßgebend ist, wird die jeweilige Standard-Ganglinie $Ref_tA$, $Ref_tB$, $Ref_tC$ dieses Tagestyps A, B, C um die aktuelle Ganglinie fortgeschrieben. Aufgebaut werden sollte hier die Standard-Ganglinie $Ref_t$ und ein zugehöriger Vertrauensbereich, wie z. B. die Standardabweichung der aufgenommenen Messdaten. Die Dauer der Lernphase hängt dabei von der Variabilität des Verkehrsablaufs an der Messstelle ab.

Während der Expertenphase des erfindungsgemäßen Verfahrens wird jede Nacht aus den in der Verkehrsmanagement-Zentrale 2 bereitgestellten Standard-Ganglinien $Ref_tA$, $Ref_tB$, $Ref_tC$ in einem Auswahlverfahren 20 gemäß FIG 2 die für den folgenden Tag oder einen anderen vorgegebenen Untersuchungszeitraum geeignete Standardganglinie von der Verkehrsmanagement-Zentrale 2 in das autarke Detektionssystem 1 per Download 3 geladen. Diese stellt dann die Referenzdaten $Ref_t$ für die aktuellen Messungen der Verkehrsstärke q und/oder der Geschwindigkeit v dar. Wie in der Lernphase wird gleichzeitig die Ganglinie des vergangenen Untersuchungszeitraums per Upload übertragen. In der Zentrale 2 wird dann für diese Ganglinie das Klassifizierungsverfahren 21 durchgeführt. Im weiteren Verlauf des erfindungsgemäßen Verfahrens wird im Detektionssystem 1 mit einem Entscheidungsverfahren 10 nach jedem Messintervall bestimmt, ob die Standard-Ganglinie $Ref_t$ noch aktuell ist, d. h. ob der neue Messwert $Mess_t$ noch innerhalb eines zulässigen Streubereiches um die heruntergeladene Standard-Ganglinie $Ref_t$ liegt. Wenn ja, dann erfolgt keine neue Übertragung, wenn nein, muss entschieden werden, ob übertragen werden soll. Bei der Übertragung werden dann die Messwerte des aktuellen sowie evtl. der vergangenen und noch nicht übertragenen Messintervalle gesendet.

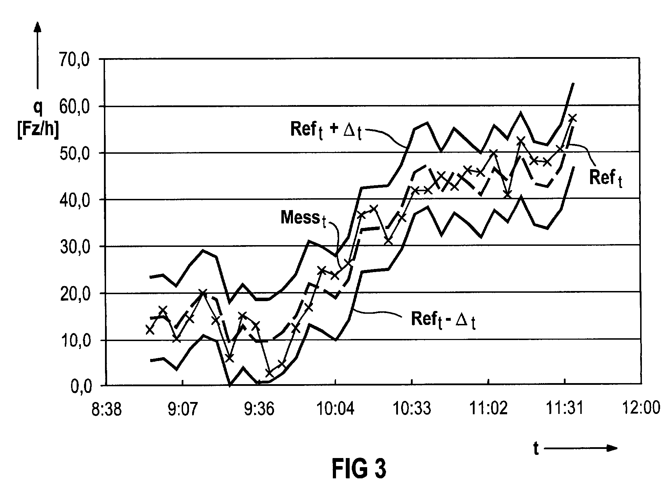

Hierzu zeigt FIG 3 ein Diagramm der Verkehrsstärkedaten q in Fahrzeugen pro Stunde während eines Untersuchungszeitraumes von etwa t = 9 Uhr bis ca. t = 11.30 Uhr. Die fettgedruckte mittlere Linie gibt die Referenzdaten $Ref_t$ mit dem Grenzwert $\Delta_t$ für die maximale obere bzw. untere Abweichung $|Mess_t-Ref_t|$ des Messwertes $Mess_t$ vom Referenzwert $Ref_t$ zu einem bestimmten Zeitpunkt t an. Damit ein kurzzeitiger zufälliger Messwert-Ausreißer keine Übertragung 3 auslöst, können verschiedene Glättungs- und Entscheidungsmechanismen implementiert werden. Zum einen können die Standard-Ganglinie $Ref_t$ und die aktuelle Ganglinie $Mess_t$ vor einem direkten Vergleich stark geglättet werden, um zufällige Schwankungen zu eliminieren. Zum anderen kann ein zulässiger Streubereich $\pm\Delta_t$ vorgegeben werden, innerhalb dessen die beiden Ganglinien voneinander abweichen dürfen. Der zulässige Grenzwert $\Delta_t$ für den Streubereich kann hierbei auf unterschiedliche Arten festgelegt werden. Er kann durch einen prozentualen Anteil des Wertes der Referenzganglinie zum relevanten Zeitpunkt oder durch eine absolute Differenz zum Wert der Referenzganglinie vorgegeben werden. Alternativ kann er durch die jeweilige über alle in die Standardganglinie eingegangenen Messungen bestimmte Standard-Abweichung dieser Referenzganglinie vorgegeben werden. Als Kriterium für die Anpassung der realen Ganglinie $Mess_t$ an die Referenzganglinie $Ref_t$ zum Zeitpunkt t kann der Wert der Übereinstimmung $u_t$ dienen:

$$u_t = \begin{cases} \dfrac{Ref_t + \Delta_t - Mess_t}{\Delta_t} \cdot 100\% & \text{für } Mess_t > Ref_t \\[2em] \dfrac{Mess_t - (Ref_t - \Delta_t)}{\Delta_t} \cdot 100\% & \text{für } Mess_t < Ref_t \end{cases}$$

Diese liefert den Wert 100%, wenn alle Messwerte identisch der Referenzkurve sind und den Wert 0%, wenn die Messwerte auf der oberen oder unteren Linie der maximalen Abweichungen liegen. Falls der aktuelle Messwert $Mess_t$ außerhalb des zulässigen Streubereichs $Ref_f\pm\Delta_t$ liegt, wird die Größe $u_t$ negativ. Die Anpassungsgüte $U_t$ ergibt

sich durch Summation der einzelnen Übereinstimmungen $u_t$ dividiert durch die Anzahl der aufsummierten Übereinstimmungswerte. Für eine vergleichbare Aussage sollte über eine konstante Anzahl an Werten gemittelt werden, die von der Streuung der Messwerte abhängt. Falls die Anpassungsgüte $U_t$ zu diesem Zeitpunkt t unter einer vorgegebenen Schwelle liegt, werden die bisher gesammelten Messwerte $Mess_t$ sowie die Anforderung an eine neue Ganglinie an die Verkehrsmanagement-Zentrale 2 gesendet. Hier kann dann entschieden werden, ob eine andere Standard-Ganglinie die bisherige Situation besser beschreibt und evtl. heruntergeladen werden sollte.

Durch die erforderliche ständige Nachführung der Standard-Ganglinien in der Zentrale ist eine Automatisierung des Parametrieraufwands möglich. Da eine Übertragung nur dann angestoßen wird, wenn eine Abweichung der aktuellen Ganglinie von der hinterlegten Referenzganglinie eintritt, ergibt sich eine Reduzierung der Datenübertragung, die umso höher ist, je besser die Referenz-Ganglinie angegeben wird. Da Standard-Ganglinien in der Zentrale hinterlegt sind, sind Prognosen auch über längere Zeiträume einfacher durchzuführen. Die Genauigkeit der Prognose steigt. Bei einer Änderung der Rahmenbedingungen der Messstelle, z. B. durch Bauarbeiten, muss auch die Standard-Ganglinie den veränderten Bedingungen angepasst werden. Dies kann z. B. im Bereich Verkehrsmanagement im Rahmen der in der Management-Zentrale durchgeführten Eingabe der Baustelle im Baustellen-Manager und mit den damit zusammenhängenden Netzänderungen durchgeführt werden. Für die Dauer der Baustelle wird dann eine spezielle Standard-Ganglinie vorgehalten. Bei Wahl eines entsprechenden Verfahrens zur Beschreibung der Standard-Ganglinien, bei dem diese durch wenige Parameter beschrieben werden können, ergeben sich geringere Anforderungen an Speicherbedarf und übertragene Datenmenge. Detektionssysteme, die mit dem beschriebenen Entscheidungsverfahren eingesetzt werden, können zur Detektion beliebiger Größen wie z. B. Überwachung von Umweltmessstellen oder Wasserständen eingesetzt werden. Je nach Wichtigkeit der Daten wird in konstanten Abständen ein Lebenszeichen als Bestätigung der Funktion des Detektionssystems erforderlich, damit keine Fehlschlüsse aus dem Nichtsenden von Messdaten gezogen werden. Da nämlich nur dann übertragen wird, wenn sich die Messgröße bzw. die Situation wesentlich verändert hat, wird in der Zentrale der Rückschluss gezogen, dass - wenn nicht übertragen wird - die Annahme der Standard-Ganglinie richtig ist. Diese Annahme ist allerdings dann falsch, wenn z. B. das Detektionssystem ausgefallen ist und nicht mehr senden kann. Wenn dann kein Lebenszeichen gesendet wird, ist das Detektionssystem spätestens zum Zeitpunkt des Updates der Ganglinie als gestört zu erkennen.

**Patentansprüche**

1.  Verfahren zur Untersuchung einer Messgröße (q, v),

    - wobei zwischen einer Untersuchungszentrale (2) und mindestens einem an einer dezentralen Messstelle angeordneten, autarken Detektionssystem (1) Daten mittels elektromagnetischer Wellen (3) übertragen werden,
    - und wobei in der Untersuchungszentrale (2) für verschiedene Typen von Untersuchungszeiträumen (A, B, C) typischerweise zu erwartende Messdaten als Referenzdaten ($Ref_tA$, $Ref_tB$, $Ref_tC$) bereitgestellt werden, **dadurch gekennzeichnet,**
    - **dass** von der Untersuchungszentrale (2) an ein Detektionssystem (1) die Referenzdaten ($Ref_t$) für einen vorgesehenen Untersuchungszeitraum gesendet werden,
    - **dass** vom Detektionssystem (1) Messdaten ($Mess_t$) erfasst werden, welche Messwerte der zu untersuchenden Messgröße (q, v) repräsentieren,
    - **dass** in Detektionssystem (1) eine Abweichung der erfassten Messdaten ($Mess_t$) von den gesendeten Referenzdaten ($Ref_t$) ermittelt wird,
    - **dass** bei Überschreitung eines vorgegebenen Grenzwertes ($\Delta_t$) der Abweichung die bis dahin im Untersuchungszeitraum erfassten Messdaten ($Mess_t$) von Detektionssystem (1) an die Untersuchungszentrale (2) gesendet und alternative Referenzdaten angefordert werden,
    - **dass** dann in der Untersuchungszentrale (2) ermittelt wird, ob alternative Referenzdaten vorliegen, von welchen die gesendeten Messdaten ($Mess_t$) eine geringere Abweichung als von den eingangs gesendeten Referenzdaten ($Ref_t$) aufweisen,
    - und **dass** gegebenenfalls solche alternativen Referenzdaten von der Untersuchungszentrale (2) an das Detektionssystem (1) gesendet werden.

2.  Verfahren nach Anspruch 1, **dadurch gekennzeichnet, dass** nach einer Untersuchung, die im Untersuchungszeitraum erfassten Messdaten ($Mess_t$) an die Untersuchungszentrale (2) gesendet und die Referenzdaten ($Ref_t$) für einen solchen Untersuchungszeitraum aktualisiert werden.

3.  Verfahren nach Anspruch 1 oder 2, **dadurch gekennzeichnet, dass** als Referenzdaten ($Ref_t$) bereits erfasste Messdaten einer anderen Messstelle mit vergleichbarem Verhalten der zu untersuchenden Messgröße (q, v) zugrunde gelegt werden.

4. Verfahren nach einem der Ansprüche 1 bis 3, **dadurch gekennzeichnet, dass** die Referenzdaten ($Ref_t$) und/oder die erfassten Messdaten ($Mess_t$) vor Ermittlung der Abweichung geglättet werden.

5. Verfahren nach einem der Ansprüche 1 bis 4, **dadurch gekennzeichnet, dass** der Grenzwert ($\Delta_t$) der Abweichung als prozentualer Anteil der jeweiligen Werte der Referenzdaten ($Ref_t$) vorgegeben wird.

6. Verfahren nach einem der Ansprüche 1 bis 4, **dadurch gekennzeichnet, dass** der Grenzwert ($\Delta_t$) der Abweichung als absoluter Betrag der jeweiligen Werte der Referenzdaten ($Ref_t$) vorgegeben wird.

7. Verfahren nach einem der Ansprüche 1 bis 4, **dadurch gekennzeichnet, dass** der Grenzwert ($\Delta_t$) der Abweichung als statistische Standardabweichung über die in die Referenzdaten ($Ref_t$) eingegangenen Messdaten ($Mess_t$) vorgegeben wird.

8. Verfahren nach Anspruch 5, 6 oder 7, **dadurch gekennzeichnet,**

   - **dass** eine auf den Grenzwert ($\Delta_t$) der Abweichung bezogene Übereinstimmung ($u_t$) zwischen den Messdaten ($Mess_t$) und den entsprechenden Referenzdaten ($Ref_t$) gemäß der Formel

$$u_t = \begin{cases} \dfrac{Ref_t + \Delta_t - Mess_t}{\Delta_t} \cdot 100\% & \text{für } Mess_t > Ref_t \\[2ex] \dfrac{Mess_t - (Ref_t - \Delta_t)}{\Delta_t} \cdot 100\% & \text{für } Mess_t < Ref_t \end{cases}$$

   berechnet wird,
   - **dass** als Maß für die Anpassungsgüte ($U_t$) das arithmetische Mittel der bis zu einem bestimmten Messzeitpunkt (t) berechneten Übereinstimmungen ($u_t$) ermittelt wird,
   - **dass** bei Unterschreiten eines vorgebbaren Schwellenwertes der Anpassungsgüte ($U_t$) die bis dahin erfassten Messdaten ($Mess_t$) an die Untersuchungszentrale (2) gesendet und alternative Referenzdaten angefordert werden.

9. Verfahren nach einem der Ansprüche 1 bis 8, **dadurch gekennzeichnet, dass** in der Untersuchungszentrale (2) Referenzdaten für geänderte Rahmenbedingungen an der Messstelle bereit gestellt werden, die bei Vorliegen solcher Bedingungen von der Untersuchungszentrale (2) an das betroffene Detektionssystem (1) gesendet werden.

10. Verfahren nach einem der Ansprüche 1 bis 9, **dadurch gekennzeichnet, dass** in regelmäßigen Zeitabständen vom Detektionssystem (1) ein Signal zur Bestätigung seiner Funktionsfähigkeit an die Untersuchungszentrale (2) gesendet wird.

11. Verfahren nach einem der Ansprüche 1 bis 10, zur Untersuchung einer verkehrstechnischen Messgröße (q, v)

   - wobei die Untersuchungszentrale (2) als Verkehrsmanagement-Zentrale ausgebildet ist,
   - wobei mindestens ein autarkes Detektionssystem (1) zur Erfassung von Verkehrsstärke (q) und/oder Geschwindigkeit (v) an einer dezentralen, straßenseitigen Messstelle angeordnet ist,
   - wobei die Datenübertragung (3) mittels elektromagnetischer Wellen über ein Kurzmitteilungsband eines Mobilfunknetzes (z. B. GSM-SMS) erfolgt,
   - wobei als Typen von Untersuchungszeiträumen (A, B, C) Typen von Tagen, Wochen oder Jahren vorgesehen sind,
   - und wobei die Messdaten ($Mess_t$) als Ganglinien erfasst und die Referenzdaten ($Ref_t$) als Standard-Ganglinien bereitgestellt werden.

12. Vorrichtung zur Durchführung eines Verfahrens nach einem der Ansprüche 1 bis 11, mit einer Untersuchungszentrale (2), mit mindestens einem an einer dezentralen Messstelle angeordneten, autarken Detektionssystem (1) zur

Erfassung von Messdaten (Mess$_t$), mit Mitteln zur Datenübertragung (3) mittels elektromagnetischer Wellen zwischen der Untersuchungszentrale (2) und mindestens einem Detektionssystem (1),

- wobei die Untersuchungszentrale (2) Mittel zum Bereitstellen von Referenzdaten (Ref$_t$) umfasst,
- wobei ein Detektionssystem (1) Mittel zum Ermitteln der Abweichung der Messdaten (Mess$_t$) von den Referenzdaten (Ref$_t$) sowie Mittel zum Entscheiden umfasst, ob die Abweichung einen vorgegebenen Grenzwert ($\Delta_t$) überschreitet,
- und wobei die Untersuchungszentrale (2) ferner Mittel zum Ermitteln alternativer Referenzdaten umfasst, von welchen von einem Detektionssystem (1) wegen einer Grenzwertüberschreitung der Abweichung zurückgesendete Messdaten (Mess$_t$) eine geringere Abweichung als die eingangs zugrundegelegten Referenzdaten (Ref$_t$) aufweisen.

q,v

```
┌──────────┐
│          │
│    11    │
│          │
└──────────┘
```

1

3

2

```
┌──────────┐
│          │
│    21    │
│          │
└──────────┘
```

Ref$_t$ C

Ref$_t$ B

Ref$_t$ A

**FIG 1**

q,v

Mess$_t$

Ref$_t$

```
┌──────────┐
│          │
│    10    │
│          │
└──────────┘
```

3

1

2

```
┌──────────┐
│          │
│    20    │
│          │
└──────────┘
```

```
┌──────────┐
│          │
│    21    │
│          │
└──────────┘
```

Ref$_t$ C

Ref$_t$ B

**FIG 2**

Ref$_t$ A

**FIG 3**